# FASCICULE DE BREVET EUROPEEN

(11) **EP 3 168 769 B1**
(45) Date de publication et mention de la délivrance du brevet: **06.01.2021**
(21) Numéro de dépôt: 16198205.3
(22) Date de dépôt: 10.11.2016
(51) Int. Cl.: G06F 21/35, G06F 21/40, H04L 29/06

(54) **PROCÉDÉ D'AIDE À L'AUTHENTIFICATION D'UN UTILISATEUR, SERVEUR ET PROGRAMME D'ORDINATEUR CORRESPONDANTS**
HILFSVERFAHREN ZUR AUTHENTIFIZIERUNG EINES NUTZERS, ENTSPRECHENDER SERVER UND ENTSPRECHENDES COMPUTERPROGRAMM
METHOD FOR ASSISTING WITH THE AUTHENTICATION OF A USER, CORRESPONDING SERVER AND COMPUTER PROGRAM

(30) Priorité: 13.11.2015 FR 1560896
(43) Date de publication de la demande: 17.05.2017
(73) Titulaire: Ingenico Group, 75015 Paris (FR)
(72) Inventeur: DUCROHET, Vincent, 78120 SAINT CYR L'ECOLE (FR); KOUDOUSSI, Hiba, 75012 PARIS (FR)
(74) Mandataire: Vidon Brevets & Stratégie

(56) Documents cités:
- WO-A1-2015/071707
- US-A1- 2015 058 931
- US-A1- 2015 294 306
- Mark Sullivan: "MasterCard and Nymi say they've completed the first heartbeat-authenticated mobile payment in the wild", http://venturebeat.com, 12 août 2015 (2015-08-12), XP055269247, Extrait de l'Internet: URL:http://venturebeat.com/2015/08/12/mast ercard-and-nymi-say-theyve-completed-the-f irst-heartbeat-authenticated-mobile-paymen t-in-the-wild/ [extrait le 2016-04-28]

## Description

### 1. Domaine

La technique proposée se rapporte à la sécurisation des transactions de paiement mises en œuvre en utilisant des données bancaires sans la présence d'une carte de paiement, c'est-à-dire en mode « carte non présente », comme par exemple les transactions effectuées sur Internet.

La technique proposée se rapporte plus spécifiquement à l'authentification de l'utilisateur lors de telles transactions.

### 2. Art Antérieur

Lors des transactions mises en œuvre pour des achats effectués sur Internet (par exemple via un ordinateur, un téléphone mobile ou tout autre dispositif apte à mettre en œuvre de telles transactions) et lorsque la carte bancaire de l'utilisateur n'est pas présente (c'est-à-dire que la carte n'est pas insérée dans un lecteur de carte et donc que les données qu'elle contient ne sont pas lues via un lecteur de carte, mais saisies par l'utilisateur via une interface de paiement), différentes techniques permettent l'authentification de l'utilisateur porteur de la carte bancaire, dans le but de vérifier que l'utilisation des données bancaires correspondant à cette carte n'est pas frauduleuse (suite à un vol de la carte par exemple, ou une copie frauduleuse des données de celle-ci).

Par exemple, il est connu d'utiliser un mécanisme d'authentification intitulé « *3D SECURE* »® qui permet notamment de limiter les risques de fraude sur Internet, liés aux tentatives d'usurpation d'identité. Il consiste à s'assurer, lors de chaque paiement en ligne, que la carte est utilisée par son véritable titulaire. Ainsi, dans le cas où, à la fois le commerçant et la banque du porteur de la carte sont équipés, une étape supplémentaire a lieu au moment du paiement. En plus du numéro de carte bancaire, de la date d'expiration de la carte et des trois chiffres du code de sécurité (imprimés au dos de la carte), l'utilisateur doit saisir un mot de passe, tel que sa date de naissance (authentification simple) ou un code dynamique à usage unique reçu par exemple sur son téléphone mobile (authentification forte).

Or, ce mécanisme dégrade fortement l'ergonomie d'une telle transaction sur Internet pour l'utilisateur, qui est sollicité soit pour saisir un code reçu via son téléphone mobile, soit pour saisir des données personnelles telles que sa date de naissance. Cette dégradation de l'ergonomie a pour effet d'augmenter fortement le taux de transactions interrompues dues à un processus jugé trop compliqué pour l'utilisateur.

Or, cette authentification du porteur de carte est primordiale pour la sécurisation de la transaction et permet notamment d'attribuer un niveau de risque ou de confiance à une transaction, ce niveau engendrant des coûts de traitement plus ou moins élevés pour le commerçant. Les documents (WO 2015/071707 A1) et (US 2015/294306 A1) constituent des documents pertinents d'art antérieur.

Il existe donc un besoin de fournir une solution permettant de sécuriser de telles transactions en mode « carte non présente » qui réponde aux problèmes de complexité, d'ergonomie et de rapidité pour l'utilisateur, ainsi que de coût et de sécurité pour tous les acteurs impliqués (marchands et organismes bancaires notamment).

### 3. Résumé

La technique proposée ne présente pas au moins certains des problèmes de l'art antérieur. L'invention est définie par les revendications indépendantes ci-jointes. Plus particulièrement, la technique proposée se rapporte à un procédé d'aide à l'authentification d'un utilisateur, procédé mis en œuvre au sein d'un serveur de fourniture de services de paiement, dit serveur de paiement, et comprenant :
- une phase de collecte d'au moins une information de fonctionnement relative à au moins un objet connecté préalablement associé à l'utilisateur ;
- une phase de gestion d'une transaction impliquant des données bancaires de l'utilisateur et un marchand, comprenant les étapes suivantes :
   ∘ traitement de ladite au moins une information de fonctionnement collectée lors de la phase de collecte, délivrant au moins une donnée représentative d'un niveau de confiance associé à la transaction ;
   ∘ transmission, vers au moins un serveur bancaire du marchand, du niveau de confiance associé à la transaction.

Ainsi, l'invention propose une solution nouvelle et inventive pour aider à authentifier un utilisateur dans le cadre d'une transaction, et plus particulièrement d'une transaction en mode « carte non présente », permettant notamment de palier l'absence de lecture des données de la carte bancaire de l'utilisateur dans ce type de transaction, tout en évitant de requérir une ou plusieurs actions particulières supplémentaires de l'utilisateur.

En effet, selon les différents modes de réalisation de l'invention, l'aide à l'authentification de l'utilisateur est basée sur la surveillance « automatique » d'objets connectés associés à l'utilisateur pour augmenter le niveau de confiance de la transaction (niveau de confiance étant par ailleurs déjà estimé selon des techniques connues). Ainsi, le niveau de confiance accordé à une transaction impliquant un utilisateur donné est renforcé par la vérification que des objets connectés associés à cet utilisateur sont effectivement proches de la localisation de la transaction.

Pour ce faire, l'invention prévoit, selon ses différents modes de réalisation, de collecter (périodiquement, lors d'une phase dite de collecte) des informations de fonctionnement (par exemple la présence ou non d'un objet connecté, sa localisation ....) d'un ou plusieurs objets connectés associés à l'utilisateur, afin de s'en servir, au moment de la transaction proprement dite (lors d'une phase dite de gestion d'une transaction), pour aider à l'authentification de l'utilisateur en déterminant un niveau de confiance associé à la transaction. Ce niveau de confiance associé à la transaction est ensuite transmis, avec les informations nécessaires à la transaction classiquement transmises également, au serveur bancaire du marchand en charge de la transaction.

Ainsi, les informations servant à l'aide à l'authentification de l'utilisateur sont collectées « automatiquement » sans intervention de l'utilisateur, uniquement à partir d'objets connectés qui lui sont préalablement associés, palliant ainsi les inconvénients des techniques classiques d'authentification d'un utilisateur nécessitant par exemple de sa part la saisie d'un code confidentiel préalablement reçu sur son smartphone.

De plus, l'invention, selon ses différents modes de réalisation, prévoit que le procédé soit mis en œuvre par un serveur de fourniture de services de paiement ou de transactions Internet, gérant les transactions de ce type (en mode « carte non présente »), et communiquant notamment avec le serveur bancaire du marchand et le marchand (ou le site marchand) impliqués dans la transaction.

Par exemple, un objet connecté prédéterminé appartient au groupe comprenant au moins :
- un ordinateur ;
- un assistant numérique personnel ;
- une tablette ;
- un smartphone ;
- une montre connectée ;
- un bracelet connecté.

Ainsi, selon ce mode de réalisation de l'invention, le ou les objets connectés surveillés pour aider à l'authentification d'un utilisateur correspondent à des objets classiquement utilisés par un utilisateur, à son domicile ou en mobilité, et pouvant lui être associés comme se trouvant la plupart du temps à proximité. De plus, les objets connectés dits « portables » (« wearable » en anglais) au sens d'une montre, d'un bracelet, d'un capteur de santé par exemple, sont d'autant plus utiles et pertinents pour l'aide à l'authentification d'un utilisateur qu'ils sont la plupart du temps réellement « physiquement » portés par l'utilisateur.

Il est à noter que plus le nombre d'objets connectés associés à l'utilisateur pouvant être surveillés est important (par exemple à la fois un ordinateur domestique, une tablette, un smartphone et une montre connectée), plus le niveau de confiance associé à la transaction est pertinent.

Selon un aspect particulier de l'invention, une information de fonctionnement collectée appartient au groupe comprenant au moins :
- une information d'activation de l'objet connecté ;
- une information de localisation de l'objet connecté ;
- une information de connexion de l'objet connecté ;
- une combinaison d'au moins deux desdites informations de fonctionnement.

Ainsi, selon ce mode de réalisation de l'invention, la ou les informations de fonctionnement collectées sont relatives à un « statut » de l'objet connecté, statut considéré pertinent pour l'aide à l'authentification de l'utilisateur comme par exemple une information d'activation (ou de présence), de connexion à un réseau local auquel est également connecté le dispositif via lequel est effectué la transaction, ou encore une information de localisation (à comparer par exemple avec la localisation du dispositif utilisé pour la transaction en ligne).

En effet, la présence ou l'absence des objets connectés associés à l'utilisateur constitue un indice permettant de renforcer ou non la probabilité que l'utilisateur impliqué dans la transaction est bien celui que l'on attend, c'est-à-dire celui dont les informations de carte bancaire ont été communiquées pour la transaction en question.

On notera que les informations de fonctionnement utilisées sont variables selon le type d'objet connecté, une information de localisation étant cependant probablement plus pertinente qu'une information de présence ou de connexion.

On notera également qu'une combinaison d'une ou plusieurs informations de fonctionnement relatives à un objet connecté peut permettre de déterminer plus précisément un niveau de confiance. Notamment par exemple dans le cas où l'information de localisation peut venir renforcer l'information de présence, ou au contraire en atténuer la pertinence par exemple lorsqu'un objet connecté est détecté comme étant connecté au réseau local domestique mais dont la localisation ne correspond pas à celle du dispositif utilisé pour la transaction.

Selon une caractéristique particulière, l'étape de traitement d'une information de fonctionnement collectée comprend les sous-étapes suivantes :
- comparaison de l'information de fonctionnement collectée avec une information de fonctionnement de référence, délivrant un résultat de comparaison ;
- mise à jour d'un niveau de confiance associé à la transaction en fonction du résultat de comparaison, délivrant la donnée représentative d'un niveau de confiance associé à la transaction.

Ainsi, selon ce mode de réalisation de l'invention, la ou les informations de fonctionnement collectées (lors de la phase de collecte) permettent la mise à jour (au moment de la transaction) d'un niveau de confiance associé à la transaction, via leur comparaison avec une ou des informations de fonctionnement de référence.

Par exemple, une information de référence correspond à un état « porté », un état « connecté à un réseau prédéterminé », ou encore à une localisation du dispositif via lequel la transaction est mise en œuvre (un smartphone ou un ordinateur par exemple).

Ainsi, lorsque l'information de fonctionnement collectée, pour un objet connecté donné, indique qu'il est présent ou connecté au réseau local domestique, et que le dispositif utilisé pour la transaction est également connecté à ce même réseau, cela renforce le niveau de confiance de la transaction. De même, lorsque l'information de fonctionnement collectée, correspondant à la localisation d'un objet connecté donné, est similaire ou proche de la localisation du dispositif via lequel la transaction est effectuée, cela renforce le niveau de confiance de la transaction.

Au contraire, si un objet connecté associé à l'utilisateur est absent, ou localisé à une distance supérieure à un seuil prédéterminé du dispositif sur lequel l'utilisateur effectue sa transaction, cela réduit le niveau de confiance de la transaction.

Selon un aspect particulier, la mise à jour du niveau de confiance tient également compte d'au moins un critère appartenant au groupe comprenant :
- une donnée représentative de la transaction ;
- une catégorie d'appartenance de l'objet connecté ;
- un contexte de mise en œuvre de la transaction ;
- une combinaison d'au moins deux desdits critères ci-dessus.

Ainsi, selon ce mode de réalisation de l'invention, la mise à jour du niveau de confiance associé à la transaction tient non seulement compte de la ou des informations de fonctionnement collectées pour le ou les objets connectés considérés mais également :
- d'une ou plusieurs données de transaction issues du marchand (ou du site marchand) par exemple (le montant de la transaction, le type de produit concerné, l'adresse de livraison, le type de carte bancaire utilisée ....), classiquement utilisées pour évaluer un niveau de confiance (encore appelé « scoring de risque ») d'une transaction. Le niveau de confiance délivré par l'étape de traitement correspond alors à un niveau de confiance classiquement calculé et mis à jour grâce au procédé de l'invention ;
- de la catégorie du ou des objets connectés dont on a collecté la ou les informations de fonctionnement. Ainsi, plusieurs catégories d'objets connectés à surveiller peuvent être définies, comme par exemple :
   ∘ les objets « essentiels », ou très pertinents, pour la mise en œuvre du procédé d'authentification selon l'invention car ce sont des objets les plus proches de l'utilisateur, idéalement des objets « physiquement » portés par l'utilisateur (par exemple une montre connectée),
   ∘ les objets « non essentiels », ou moins pertinents, mais permettant d'affiner le niveau de confiance, non portés « physiquement » par l'utilisateur mais pouvant lui être associés en fonctionnement classique à domicile par exemple (par exemple un ordinateur ou une tablette) ;
- d'un contexte/usage de transaction : à domicile (la localisation est alors une information de fonctionnement aisément exploitable), en mobilité (la localisation est alors moins fiable mais une donnée complémentaire relative par exemple au véhicule utilisé peut être intéressante).

Selon une caractéristique particulière, la phase de collecte comprend :
- une étape d'enregistrement, dans au moins une base de données rattachée au serveur de paiement, d'au moins un identifiant et d'au moins une caractéristique de collecte pour l'objet connecté, et
au moins une itération des étapes suivantes :
- collecte de ladite au moins une information de fonctionnement associée audit au moins un objet connecté associé à l'utilisateur, la collecte utilisant ladite au moins une caractéristique de collecte enregistrée ;
- horodatage de ladite au moins une information de fonctionnement collectée et mise à jour de la base de données avec ladite au moins une information de fonctionnement collectée horodatée.

Ainsi, selon ce mode de réalisation de l'invention, une étape préalable d'enregistrement des objets connectés utilisés pour l'aide à l'authentification d'un utilisateur permet de stocker, dans une base de données, l'identifiant d'un objet connecté et une caractéristique associée à cet objet, de manière à permettre ensuite la collecte d'informations de fonctionnement associées aux objets connectés préalablement enregistrés dans la base de données.

Ensuite, pendant la phase de collecte proprement dite, la base de données est mise à jour avec des informations de fonctionnement collectées (par exemple périodiquement ou sur requête du serveur de paiement) horodatées pour leur exploitation durant la phase de transaction.

Pour ce faire, la ou les caractéristiques associées à un objet connecté lors de l'étape préalable d'enregistrement permettent de définir les « modalités de collecte » de la ou des informations de fonctionnement associées à cet objet. Par exemple, une caractéristique de collecte correspond à une adresse IP d'un ordinateur, un numéro SIM (pour « *Subscriber Identity Module* » en anglais) d'un téléphone portable, des données d'appairage pour une connexion de type Bluetooth®, des données de point d'accès WI-FI® ..., variable selon le type d'objet connecté et permettant d'obtenir l'information de fonctionnement correspondante : présence de l'objet, connexion de l'objet, localisation de l'objet...

L'horodatage permet quant à lui de vérifier que les informations de fonctionnement collectées sont pertinentes par rapport à l'heure de la transaction.

Par exemple, la phase de gestion d'une transaction est déclenchée par la réception d'au moins un message en provenance d'un dispositif mettant en œuvre la transaction impliquant les données bancaires de l'utilisateur.

Ainsi, selon ce mode de réalisation de l'invention, c'est lorsque le serveur de paiement reçoit des données relatives à une transaction en cours (par exemple de type montant, type de carte utilisée, numéro de carte et date d'échéance, code de sécurité, site marchand concerné ....) et que les données de carte correspondent à une carte bénéficiant du procédé d'aide à l'authentification de l'utilisateur objet de la présente invention, que la phase de transaction proprement dite de ce procédé est déclenchée.

C'est donc à réception d'un message par le serveur de paiement que les données collectées lors de la phase de collecte préalable sont traitées.

L'invention se rapporte également à un serveur de fourniture de services de paiement mettant en œuvre le procédé d'aide à l'authentification d'un utilisateur tel que décrit précédemment, le serveur de fourniture de services de paiement comprenant :
- un module de collecte, comprenant au moins un récepteur apte à collecter au moins une information de fonctionnement relative à au moins un objet connecté préalablement associé à l'utilisateur ;
- un module de gestion d'une transaction impliquant des données bancaires de l'utilisateur et un marchand, comprenant :
   ∘ un module de traitement de ladite au moins une information de fonctionnement collectée, délivrant au moins une donnée représentative d'un niveau de confiance associé à la transaction ;
   ∘ un module de transmission, comprenant au moins un émetteur apte à transmettre, vers au moins un serveur bancaire du marchand, le niveau de confiance associé à la transaction.

Un tel serveur de paiement, encore appelé serveur de fourniture de transactions Internet, correspond à un serveur en charge des transactions en ligne et également des méthodes de sécurisation supplémentaires parfois requises pour une transaction, comme la technique de *3D SECURE*®*.*

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, d'ordinateur téléchargeable depuis un réseau de communication et/ou stocké sur un support lisible par ordinateur et/ou exécutable par un microprocesseur, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 illustre les principales étapes du procédé d'aide à l'authentification d'un utilisateur, selon un mode de réalisation particulier de l'invention ;
- la figure 2 représente un exemple de système dans lequel l'invention peut être mise en œuvre, selon un mode de réalisation particulier ;
- la figure 3 illustre un diagramme de séquences d'un mode de réalisation particulier de l'invention ;
- les figures 4 et 5 illustrent deux exemples d'architectures simplifiées d'un serveur de fourniture de services de paiement, pour la mise en œuvre du procédé d'aide à l'authentification d'un utilisateur, selon un mode de réalisation particulier de l'invention.

### 5. Description

### 5.1. Principe général

Le principe général de la technique proposée consiste à utiliser des objets connectés associés à un utilisateur pour aider à son authentification lors d'une transaction impliquant des données bancaires associées à l'une de ses cartes bancaires ou l'un de ses comptes bancaires, transaction mise en œuvre en mode « carte non présente ».

Plus précisément, le principe général est basé sur la vérification que des objets connectés, préalablement associés à un utilisateur donné, sont présents ou proches de la localisation de la transaction (c'est-à-dire proche du dispositif via lequel une transaction est mise en œuvre), au moment de cette transaction, et donc que le porteur de la carte est bien celui que l'on attend.

En effet, si un utilisateur U utilise sa carte bancaire pour effectuer un achat en ligne, et que l'on peut vérifier que sa montre connectée est bien à son poignet, que son smartphone est bien dans sa poche, et que l'ordinateur sur lequel la transaction a lieu est bien l'ordinateur associé à cet utilisateur, alors il est probable que la carte bancaire soit valablement utilisée par l'utilisateur U.

A contrario, si la carte bancaire de cet utilisateur U a été volée, ou si les informations relatives à cette carte ont été frauduleusement récupérées, alors il est probable qu'au moment de l'utilisation de ces informations pour une transaction, par exemple par un tiers malveillant effectuant cette transaction sur son propre ordinateur, les objets connectés associés à l'utilisateur porteur de cette carte bancaire ne soient pas présents ou proches de la localisation de la transaction.

Pour ce faire, l'invention, selon ses différents modes de réalisation, est mise en œuvre par un serveur fourniture de services de paiement (ou de transaction Internet), appelé serveur de paiement par la suite, communiquant à la fois avec les différents objets connectés associés à l'utilisateur, avec le marchand proposant la transaction et avec le serveur bancaire de ce marchand.

Ainsi, des informations, dites de fonctionnement, associées à des objets connectés d'un utilisateur, sont utilisées, pour savoir par exemple si un objet connecté est présent, ou connecté à un réseau donné, ou localisé à une distance proche du lieu de la transaction ...

L'invention prévoit donc une phase préalable à la transaction proprement dite, permettant de collecter ces informations de fonctionnement relatives à ces différents objets connectés associés à l'utilisateur.

Cette première phase, dite de collecte, comprend notamment une étape d'enregistrement de tous les objets connectés associés à l'utilisateur, par exemple dans une base de données du serveur de paiement mettant en œuvre le procédé, permettant non seulement de référencer ces objets connectés mais également de leur associer des caractéristiques utiles et nécessaires pour la collecte d'informations de fonctionnement y relatives.

Ensuite, lors d'une phase de gestion de la transaction proprement dite, les informations de fonctionnement collectées sont traitées pour mettre à jour un niveau de confiance associé à la transaction, ce niveau de confiance étant ensuite transmis, avec des informations de transaction « classiques », au serveur bancaire du marchand. Ce dernier évalue alors la transaction, par exemple sous la forme d'un « profil de risque », destiné ensuite à être exploité par le serveur de paiement qui, à partir d'informations fournies par le site marchand, détermine un « coût de transaction » permettant de décider si la transaction est suffisamment sécurisée ou non. Pour ce faire, le site marchand définit par exemple un niveau de coût acceptable (un seuil), au-dessus duquel une sécurisation supplémentaire doit être mise en œuvre par le serveur de paiement, ou bien une transaction doit être refusée (il peut y avoir deux seuils par exemple).

### 5.2. Description d'un mode de réalisation

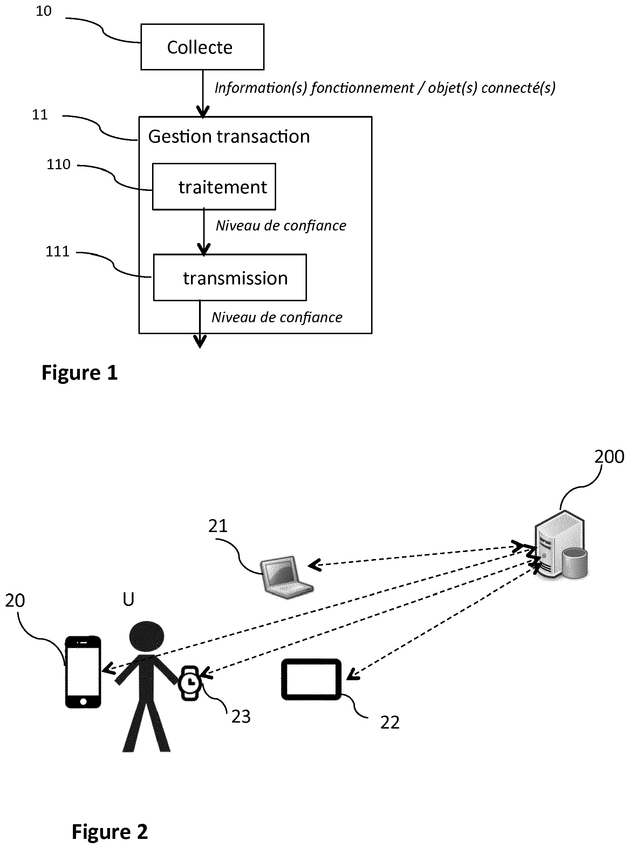

On décrit maintenant, en relation avec les figures 1 à 3, les principales étapes du procédé d'aide à l'authentification selon un premier mode de réalisation de l'invention, pour un utilisateur donné (noté U par la suite) auquel sont associés des objets connectés 20 à 23 (illustrés en figure 2).

Ainsi, dans le présent exemple, on considère que l'utilisateur U possède les objets connectés suivants : un smartphone 20, un ordinateur 21, une tablette 22 et une montre connectée 23, ces objets connectés étant aptes à être utilisés pour aider à l'authentification de l'utilisateur lors de transactions ultérieures mettant en œuvre une de ses cartes bancaires.

Comme déjà indiqué ci-dessus, les principales étapes du procédé de l'invention sont regroupées en deux phases : une phase de collecte 10 et une phase de gestion d'une transaction 11.

La phase de collecte 10 permet de recueillir les informations de fonctionnement associées aux différents objets connectés de l'utilisateur, après les avoir préalablement enregistrés, par exemple dans une base de données du serveur de paiement 200.

Ainsi, cet enregistrement permet de définir quels sont les objets associés à un utilisateur donné, dans cet exemple l'utilisateur U, ainsi que les « modalités » de collecte des informations de fonctionnement relatives à ces objets connectés.

Par exemple, les objets connectés précités 20 à 23 sont référencés, au sein du serveur 200, avec les caractéristiques suivantes, permettant la collecte ultérieure des informations de fonctionnement pertinentes pour l'aide à l'authentification de l'utilisateur U :
- le smartphone 20 est caractérisé par un identifiant (par exemple le numéro IMSI (pour « *International Mobile Subscriber Identity* » en anglais) de la carte SIM (pour *« Subscriber Identity Module* » en anglais), cet identifiant permettant notamment de connaître la localisation du smartphone 20, via le réseau de communication auquel il est connecté ;
- l'ordinateur 21 est caractérisé par un numéro de série et une adresse IP (pour *« Internet Protocol* » en anglais), l'adresse IP permettant notamment de savoir si l'ordinateur est connecté ou non, ainsi que de connaître sa localisation ;
- la tablette 22 est caractérisée également par un numéro de série et une adresse IP;
- la montre connectée 23 est caractérisée par le fait qu'elle soit activée (donc au poignet de l'utilisateur) et par des données d'appairage (par exemple avec le smartphone 20) pour les communications Bluetooth®, ces données d'appairage avec le smartphone permettant notamment de savoir si la montre est bien portée par l'utilisateur (voire d'entrer en communication avec pour en connaître la localisation) ; en effet, une montre connectée non portée est non active. En revanche, quand l'utilisateur la met à son poignet, la montre détecte quelle est portée (via un capteur de biométrie généralement) et ensuite affiche un code (par exemple à quatre chiffres) que l'utilisateur doit saisir sur son smartphone. A chaque fois que la montre est enlevée puis remise, il faut faire la même opération. De ce fait, il est possible de vérifier que la montre est bien portée (puisque synchronisée avec le smartphone qui est bien celui de l'utilisateur).

Pour mettre en œuvre cette étape d'enregistrement préalable, l'utilisateur U peut par exemple télécharger, sur proposition de l'organisme bancaire qui gère ses cartes et comptes bancaires, une application sur un ou plusieurs dispositifs (par exemple son smartphone, son ordinateur et/ou sa tablette), permettant de référencer ses objets connectés.

Cette étape d'enregistrement peut être suivie par une étape de vérification, par exemple via un test des modalités de collecte, de façon à initier une première collecte d'informations de fonctionnement relatives aux objets connectés enregistrés.

Ainsi, l'application met en œuvre une première « interrogation » des différents objets connectés référencés, via les caractéristiques associées, afin de tester si celles-ci permettent effectivement de collecter les informations de fonctionnement pour chaque objet. Ainsi, par exemple, l'application vérifie qu'à partir de l'adresse IP enregistrée pour l'ordinateur, il est effectivement possible de détecter que l'ordinateur est présent et de déterminer sa localisation. Il en est de même pour la tablette par exemple. Pour ce qui est du smartphone, l'application peut vérifier que l'identifiant enregistré correspond bien à un dispositif existant et permet de localiser ce dispositif. Enfin, pour ce qui concerne la montre connectée, l'application peut tenter d'entrer en communication Bluetooth®, via les données d'appairage enregistrées, afin de vérifier que la montre est bien connectée (c'est-à-dire portée par l'utilisateur), voire même qu'elle répond à une sollicitation prédéterminée.

De plus, cette application peut également permettre à l'utilisateur de paramétrer la phase de collecte, par exemple pour ce qui concerne la fréquence de collecte des informations de fonctionnement. En effet, la fréquence de mise à jour des informations de fonctionnement peut être paramétrée par exemple en fonction de critères tels que la fréquence de paiements en ligne effectués par l'utilisateur, ou encore le degré de mobilité de cet utilisateur, de façon à ce que, lorsqu'une transaction est initiée, les informations collectées soient les plus pertinentes possible (une information de localisation datant de plusieurs heures étant évidemment moins pertinente qu'une information de localisation obtenue dans les minutes précédant la transaction par exemple).

Selon les usages de chaque utilisateur, cette application peut être installée de préférence sur un dispositif mobile lorsque l'utilisateur effectue principalement des achats en ligne en mobilité, ou sur un dispositif tel qu'un ordinateur domestique, lorsque l'utilisateur effectue principalement des achats en ligne à domicile.

Il est à noter que cette étape d'enregistrement peut être réitérée à n'importe quel moment, par exemple lorsque l'utilisateur souhaite référencer un autre objet connecté, ou supprimer un objet connecté référencé dont il n'a plus l'usage .... La phase de collecte proprement dite tient alors compte de chaque mise à jour de la base de données.

Une fois cette première étape d'enregistrement effectuée, la phase de collecte 10 proprement dite est mise en œuvre, selon la périodicité paramétrée (par exemple toutes les heures, ou 3 fois par jour ....).

Lorsqu'une information de fonctionnement est collectée, pour un objet connecté donné, elle est horodatée et stockée dans la base de données du serveur de paiement. Ainsi, cela donne par exemple, pour les objets connectés précédemment enregistrés pour l'utilisateur U :

| | | |
|---|---|---|
| smartphone 20 /numéro IMSI *123* | localisation *L123* / 14h00 | Référence = localisation du dispositif de mise en œuvre de la transaction |
| | localisation *L123* / 14h30 | |
| ordinateur 21 / numéro de série *456* / adresse *IP1* | localisation *L456-IP1* / 14h00 | Référence = localisation du dispositif de mise en œuvre de la transaction |
| | localisation *L456-IP1* / 14h15 | |
| | localisation *L456-IP1* / 14h30 | |
| tablette 22/ numéro de série *789* / adresse *IP2* | localisation *L789-IP2* / 14h00 | Référence = localisation du dispositif de mise en œuvre de la transaction |
| | localisation *L789-IP2* / 14h30 | |
| montre connectée 23 / code appairage *aaa* | présence *Laaa* / 14h00 | Référence = montre portée |
| | présence *Laaa* / 14h15 | |
| | présence *Laaa* / 14h30 | |

La base de données peut présenter, comme illustré dans le tableau ci-dessus, un historique des informations de fonctionnement collectées, en fonction de la périodicité, ou ne conserver que la dernière information de fonctionnement collectée. Ceci peut par exemple faire partie du paramétrage proposé à l'utilisateur lorsqu'il installe l'application précitée.

Ensuite, lorsqu'une carte bancaire, ou des données bancaires, préalablement associées à l'utilisateur U sont impliquées dans une transaction en mode « carte non présente », par exemple une transaction en ligne, la phase de gestion de la transaction 11 est mise en œuvre.

On décrit ci-après deux cas d'usage d'une telle transaction, dans lesquels les données bancaires de l'utilisateur U sont utilisées par lui-même (premier cas d'usage) ou utilisées par un tiers malintentionné après usurpation (vol de carte ou copie des données bancaires) (deuxième cas d'usage).

### a) Description d'un premier cas d'usage

On considère, dans ce premier cas d'usage, que l'utilisateur U effectue une transaction en ligne sur son ordinateur 21.

Comme illustré en figure 1, la phase 11 de gestion de la transaction comprend une première étape de traitement 110 d'une ou plusieurs informations de fonctionnement préalablement collectées lors de la phase 10 de collecte, pour un ou plusieurs des objets connectés associés à l'utilisateur, de façon à délivrer une donnée représentative d'un niveau de confiance associé à la transaction en cours.

Cette étape de traitement 110 peut comprendre plusieurs sous-étapes (non illustrées) permettant de calculer cette donnée représentative d'un niveau de confiance, en tenant également compte, éventuellement, d'autres paramètres liés à la transaction proprement dite (paramètres souvent fournis par le marchand ou le site marchand, décrits plus en détails ci-dessous).

Ainsi, dans notre exemple, les données de localisation collectées pour les trois premiers objets connectés 20 à 22 sont comparées à la localisation du dispositif via lequel la transaction est effectuée, en l'occurrence l'ordinateur 21 de l'utilisateur U.

Lorsque la localisation d'un des objets connectés associés à l'utilisateur correspond, ou est proche de celle de l'ordinateur 21, un résultat de comparaison positif est délivré. La comparaison de localisations peut classiquement mettre en œuvre un seuil prédéterminé, en deçà duquel on estime que les localisations sont proches, et au-delà duquel au contraire on estime que les localisations sont trop éloignées pour l'objectif de la présente invention.

Pour ce qui est de la montre connectée, si l'information de fonctionnement collectée indique que la montre est portée (ce qui correspond à l'information de référence pour ce type d'objet), alors un résultat de comparaison positif est également délivré.

Ces résultats de comparaison sont ensuite utilisés pour mettre à jour un niveau de confiance associé à la transaction et ainsi délivrer la donnée représentative d'un niveau de confiance.

Par exemple, si l'on considère un niveau de confiance correspondant à un chiffre situé entre zéro et dix (dix étant le niveau de confiance maximum), on peut envisager que chaque résultat de comparaison positif incrémente d'une unité un niveau de confiance par défaut égal à cinq, et qu'au contraire, chaque résultat de comparaison négatif décrémente le niveau de confiance d'une unité. Dans ce cas, la donnée représentative d'un niveau de confiance peut correspondre elle aussi à un chiffre situé entre zéro et dix. Il est également possible, selon l'algorithme mis en œuvre, que certains résultats de comparaison représentent une « pondération » plus importante que d'autres, par exemple en fonction de la catégorie de l'objet connecté, comme décrit ci-dessous.

Tout autre mode de mise à jour du niveau de confiance permettant de tenir compte des informations de fonctionnement collectées pour les objets connectés associés à l'utilisateur U peut être défini. Ainsi, la donnée représentative d'un niveau de confiance peut correspondre à un pourcentage reflétant le risque.

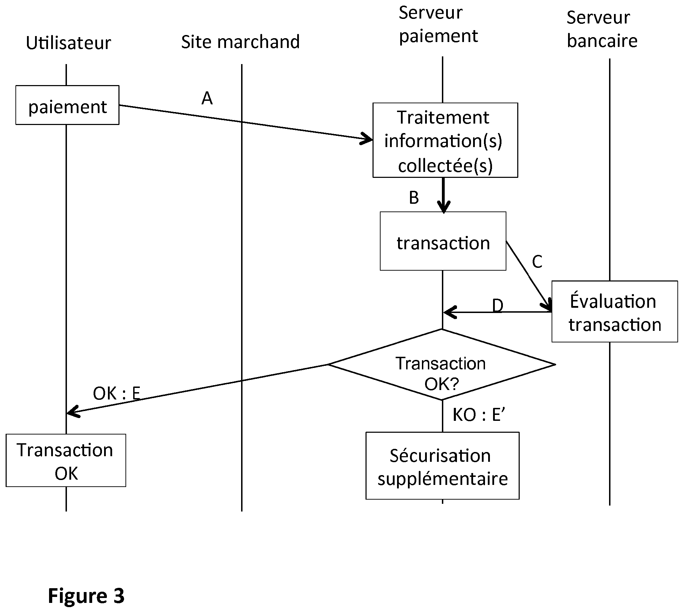

Quelque soit la forme que peut prendre le niveau de confiance, le marchand définit à partir de quel niveau il décide d'accepter les transactions, de les refuser ou de requérir un contrôle supplémentaire, comme détaillé plus loin en relation avec la figure 3.

Par ailleurs, le niveau de confiance mis à jour selon les résultats de comparaison décrits ci-dessus peut également tenir compte de critères/paramètres complémentaires tels que :
- une donnée représentative de la transaction : par exemple une ou plusieurs données issues du marchand ou du site marchand (le montant de la transaction, le type de produit concerné, l'adresse de livraison, le type de carte bancaire utilisée ....), classiquement utilisées pour évaluer un niveau de confiance (encore appelé « scoring de risque ») d'une transaction ;
- une catégorie d'appartenance de l'objet connecté : par exemple un objet connecté réellement porté par l'utilisateur (comme une montre ou un bracelet) peut être classé comme un objet « prioritaire » dont le résultat de comparaison peut avoir plus d'importance dans la mise à jour du niveau de confiance que celui d'un objet « non prioritaire » (comme un smartphone) ; dans ce cas et selon l'exemple décrit ci-dessus, le résultat de comparaison pour un objet « prioritaire » pourrait incrémenter de deux unités le niveau de confiance ;
- un contexte de mise en œuvre de ladite transaction : par exemple des données supplémentaires d'identification du véhicule dans lequel se trouve l'utilisateur au moment d'une transaction en mobilité (identité du propriétaire, localisation par rapport à des trajets prédéterminés (domicile-lieu de travail par exemple)).

Une combinaison de plusieurs des paramètres/critères complémentaires décrits ci-dessus peut bien sûr être utilisée, de manière à renforcer la pertinence du niveau de confiance.

De plus, ces paramètres/critères complémentaires peuvent par exemple permettre de déterminer le niveau de confiance « par défaut », c'est-à-dire avant la mise en œuvre de l'invention et l'utilisation des informations de fonctionnement collectées, ou être utilisés pour incrémenter ou décrémenter un niveau de confiance par défaut prédéterminé.

Enfin, ces paramètres/critères complémentaires peuvent être issus de capteurs ou de sources de données prédéterminées, mis en œuvre dans le cadre de la présente invention, comme par exemple des capteurs permettant de localiser le véhicule de l'utilisateur.

Une fois cette donnée représentative d'un niveau de confiance délivrée, elle est transmise, lors d'une étape 111 de transmission, au serveur bancaire du marchand. Cette donnée représentative d'un niveau de confiance peut être transmise en même temps que des données de transaction classiquement transmises par le serveur de paiement au serveur bancaire du marchand.

En effet, lors d'une transaction « classique » connue en mode « carte non présente », un serveur de paiement transmet au serveur bancaire du marchand des informations de transactions telles que le marchand, le montant, les données de carte (nom et prénom du titulaire, numéro, date d'expiration, code de sécurité), date et heure de la transaction, type de la transaction (autorisation, capture...) ainsi qu'un « scoring de sécurité » issu d'un calcul tenant compte de paramètres essentiellement fournis par le marchand ou le site marchand (le type de produit concerné, l'adresse de livraison, le type de carte bancaire utilisée). Comme décrit ci-dessous en relation avec la figure 3, ces informations sont utilisées par le serveur bancaire du marchand pour évaluer un coût de traitement de la transaction, que le serveur bancaire renvoie au serveur de paiement. Ce dernier utilise ces informations pour déterminer un coût de traitement de la transaction, à partir de données préalablement fournies par le marchand ou le site marchand. Par exemple, ces informations correspondent à un ou plusieurs seuils au-delà duquel ou desquels le coût de traitement est considéré comme trop élevé pour accepter telle quelle la transaction.

Ainsi, il existe par exemple plusieurs possibilités de gestion de la transaction, selon le coût de traitement évalué par le serveur de paiement :
- le risque est faible alors le serveur de paiement envoie les détails de la transaction (montant, numéro de carte...) au serveur bancaire ;
- le risque est fort alors le serveur de paiement commence une étape supplémentaire type *3D SECURE®* avec le consommateur ;
- le risque est trop fort alors le serveur de paiement refuse la transaction et le consommateur est averti.

Le procédé d'aide à l'authentification de l'invention, selon ses différents modes de réalisation, permet donc de renforcer le niveau de confiance associé à la transaction, de manière à affiner le coût de traitement calculé par le serveur bancaire du marchand, sans intervention supplémentaire de l'utilisateur, garantissant ainsi l'ergonomie de la transaction en ligne contrairement aux techniques connues de l'art antérieur.

On décrit donc maintenant plus en détails les différents échanges mis en œuvre entre le consommateur, le marchand ou le site marchand, le serveur de paiement mettant en œuvre l'invention et le serveur bancaire du marchand, en relation avec la figure 3.

Dans un premier temps, l'utilisateur U renseigne, classiquement, les données requises pour le paiement d'un objet ou d'un service sur un site marchand, et notamment des données de carte bancaire (numéro, date d'expiration, code de sécurité). Ces données sont transmises vers le serveur de paiement (séquence A), déclenchant ainsi la phase de transaction proprement dite du procédé d'aide à l'authentification selon ce mode de réalisation de l'invention.

Pour ce faire, le serveur de paiement détecte que les données bancaires transmises correspondent à celles de l'utilisateur U préalablement enregistré, et qui bénéficie du service d'aide à l'authentification selon la présente invention. Le serveur de paiement interroge alors la base de données (en interne ou via un réseau permettant d'accéder à cette base de données « externalisée ») comprenant notamment les informations de fonctionnement horodatées collectées pour les objets connectés associés à cet utilisateur U. Le serveur de paiement met alors en œuvre la première étape de cette phase de transaction, qui consiste à traiter ces informations de fonctionnement préalablement collectées pour les objets connectés associés à l'utilisateur U. Comme décrit ci-dessus, ce traitement permet de déterminer une donnée représentative d'un niveau de confiance associé à la transaction (séquence B), laquelle est utilisée, par le serveur de paiement, pour réaliser la transaction en créant le message de paiement qui sera transmis au serveur bancaire du marchand (encore appelé « acquéreur bancaire » du marchand).

Ensuite, cette transaction est transmise (séquence C) au serveur bancaire du marchand, avec la donnée représentative du niveau de confiance associé. Pour rappel, cette donnée représentative du niveau de confiance associé à la transaction peut prendre une forme classique d'un niveau de confiance, encore appelé « scoring de risque », renforcé/affiné par l'utilisation des objets connectés associés à l'utilisateur, selon la présente invention.

Le serveur bancaire du marchand met alors en œuvre une évaluation de la transaction reçue en provenance du serveur de paiement, cette évaluation étant connue en soi. Il en ressort, comme décrit précédemment, un coût de traitement de la transaction destiné à éclairer le serveur de paiement quant à une éventuelle sécurisation supplémentaire à mettre en œuvre pour la transaction en cours. Ce coût de traitement est donc transmis (séquence D) au serveur de paiement par le serveur bancaire du marchand.

Le serveur de paiement analyse alors ce coût de traitement de la transaction, à partir notamment d'informations fournies par le site marchand ou le marchand, et décide si la transaction peut être validée (séquence E), ce qui correspond à ce premier cas d'usage, ou s'il est nécessaire de mettre en œuvre une sécurisation supplémentaire (de type *3D SECURE®* par exemple) (séquence E') (deuxième cas d'usage décrit ci-dessous), ou encore si la transaction est refusée.

Selon ce premier cas d'usage, la transaction est donc validée, sans nécessiter de sécurisation supplémentaire, et l'utilisateur bénéficie alors d'un service de paiement en ligne à la fois sécurisé, rapide et pratique, ne nécessitant pas d'étape supplémentaire pour saisir des données complémentaires comme avec la mise en œuvre du *3D SECURE®* par exemple.

### b) Description d'un deuxième cas d'usage

Si l'on prend cette fois-ci un second exemple dans lequel les données bancaires de l'utilisateur U sont usurpées par un tiers malintentionné, les séquences de la figure 3 se déroulent de la manière décrite ci-après.

Les données bancaires de l'utilisateur, usurpées, sont saisies sur le site marchand et transmises (séquence A) au serveur de paiement, comme dans le premier cas d'usage. Cette réception, par le serveur de paiement, déclenche la phase de transaction du procédé de l'invention, laquelle commence par le traitement des informations de fonctionnement collectées pour les objets connectés associés à l'utilisateur U.

Selon une première variante, la localisation du dispositif via lequel la transaction est effectuée (c'est à dire l'ordinateur ou le smartphone du tiers malintentionné ayant usurpé les données bancaires de l'utilisateur U) n'est pas possible. Par exemple, l'adresse IP de ce dispositif n'est pas accessible ou ne permet pas une localisation ou le numéro de série est inconnu. Cela engendre des résultats négatifs pour les comparaisons de proximité des objets connectés, via leurs informations de fonctionnement préalablement collectées, délivrant un niveau de confiance faible, voire nul, pour la transaction en cours. En effet, aucune information de référence n'étant disponible pour la localisation de la transaction, toute comparaison d'une localisation d'un objet connecté avec une information de référence non disponible délivre un résultat de comparaison négatif. Dans le cas de l'utilisateur U et des objets connectés 20 à 22, plusieurs comparaisons délivrent donc des résultats négatifs, et le niveau de confiance associé à la transaction est donc fortement dégradé, voir nul.

Selon une deuxième variante, l'adresse IP du dispositif via lequel la transaction est effectuée (c'est à dire l'ordinateur ou le smartphone du tiers malintentionné ayant usurpé les données bancaires de l'utilisateur U) permet d'en déterminer la localisation. Cette localisation, qui ne correspond pas au dispositif enregistré par l'utilisateur U, peut donc servir de référence pour les comparaisons avec les localisations collectées des objets connectés associés à l'utilisateur. Bien entendu, ces comparaisons sont également négatives car il est peu probable que le dispositif du tiers malintentionné soit proche des objets connectés de l'utilisateur U. Là encore, le niveau de confiance associé à la transaction en cours est faible, voire nul.

La donnée représentative d'un niveau de confiance associé à la transaction est donc déterminée (séquence B), puis utilisée, par le serveur de paiement, pour réaliser la transaction.

Comme dans le premier cas d'usage décrit ci-dessus, cette transaction, avec la donnée représentative du niveau de confiance associé, est transmise (séquence C) au serveur bancaire du marchand.

Le serveur bancaire du marchand met alors en œuvre une évaluation de la transaction reçue en provenance du serveur de paiement, cette évaluation étant connue en soi. Il en ressort un coût de traitement de la transaction destiné à éclairer le serveur de paiement quant à une éventuelle sécurisation supplémentaire à mettre en œuvre pour la transaction en cours. Ce coût de traitement est donc transmis (séquence D) au serveur de paiement par le serveur bancaire du marchand.

Dans ce deuxième cas d'usage, le niveau de confiance associé à la transaction en cours étant faible, voire nul, du fait de la non authentification de l'utilisateur U via ses objets connectés, le coût de traitement de la transaction est très élevé. Le serveur de paiement décide alors que ce coût est trop élevé et requiert (séquence E'), une sécurisation supplémentaire ou alors refuse la transaction.

Dans le cas d'une demande de sécurisation supplémentaire, par exemple, une sécurisation du type *3D SECURE®* est mise en œuvre, via la transmission d'un code à usage unique sur un dispositif préalablement enregistré comme appartenant à l'utilisateur U, de façon à ce que dernier, à réception, le saisisse sur le site marchand. Or, dans ce deuxième cas d'usage, ce code ne peut pas être reçu par le tiers malintentionné ayant initié le paiement, qui ne pourra donc pas répondre à la sécurisation requise. La transaction ne peut donc pas aboutir.

Dans ce cas d'usurpation des données bancaires de l'utilisateur U, le procédé d'aide à l'authentification de l'utilisateur de l'invention a donc permis d'éviter une transaction frauduleuse, grâce à l'utilisation des informations de fonctionnement collectées pour les objets connectés associés à l'utilisateur U.

Différentes variantes de réalisation de l'invention, concernant par exemple les objets connectés, les informations de fonctionnement collectées, le traitement des informations de fonctionnement collectées ou encore le type de niveau de confiance utilisé, peuvent être mises en œuvre et ne sont pas décrites dans la présente demande, dans la mesure où elles permettant de répondre à la problématique de sécurisation de transactions en mode « carte non présente » tout en répondant aux problèmes de complexité, d'ergonomie et de rapidité pour l'utilisateur, ainsi que de coût et de sécurité pour tous les acteurs impliqués (marchands et organismes bancaires notamment).

### 5.3. Serveur de fourniture de services de paiement

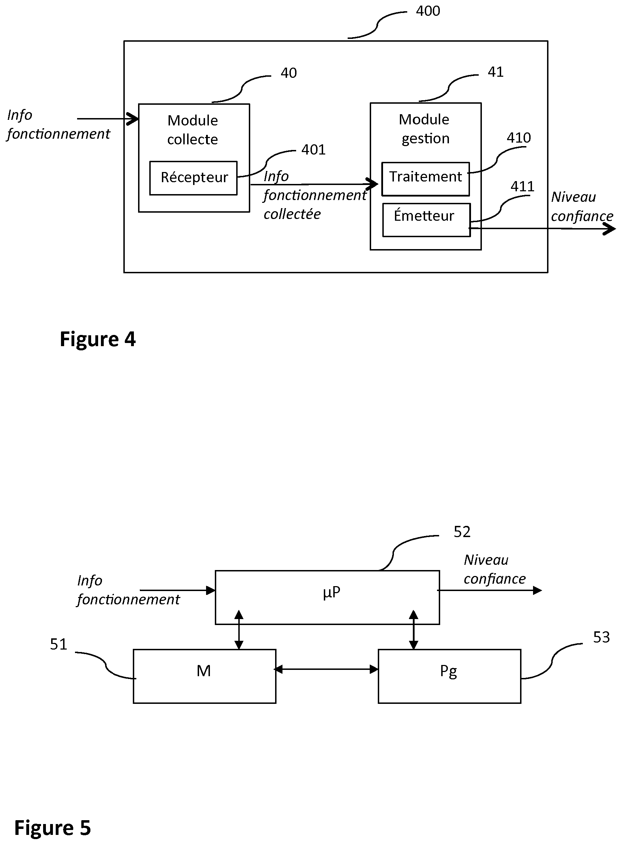

On présente maintenant, en relation avec les figures 4 et 5, deux exemples d'architectures simplifiées d'un serveur de fourniture de services de paiement 400 pour la mise en œuvre du procédé d'aide à l'authentification d'un utilisateur selon l'un des modes de réalisation de l'invention.

Par exemple, un tel serveur de paiement 400, dit serveur de paiement, comprend :
- un module de collecte 40, comprenant au moins un récepteur 401 d'au moins une information de fonctionnement relative à au moins un objet connecté préalablement associé à l'utilisateur; par exemple, un tel récepteur 401 est apte à recevoir des données via un réseau de communication filaire ou sans fil auquel est connecté à la fois le serveur de paiement 400 et les objets connectés de l'utilisateur ;
- un module de gestion 41 d'une transaction impliquant des données bancaires de l'utilisateur et un marchand, comprenant :
   ∘ un module de traitement 410 d'au moins une information de fonctionnement collectée, délivrant au moins une donnée représentative d'un niveau de confiance associé à la transaction ; par exemple, un tel module de traitement 410 est apte à récupérer des données dans une base de données et à comparer des informations de localisation ;
   ∘ un module de transmission, comprenant au moins un émetteur 411, vers au moins un serveur bancaire du marchand, du niveau de confiance associé à la transaction ; par exemple, un tel émetteur 411 est apte à transmettre des données, via un réseau de communication filaire ou sans fil auquel est connecté à la fois le serveur de paiement 400 et le serveur bancaire du marchand.

Un tel serveur de paiement 400 correspond par exemple à un serveur de paiement classiquement mis en œuvre dans le cadre de transactions en ligne, en particulier en mode « carte non présente », adapté à mettre en œuvre le procédé d'aide à l'authentification d'un utilisateur de l'invention, selon ses différent modes de réalisation.

Un tel serveur de paiement 400 comprend par exemple, comme illustré en figure 5, une mémoire 51 constituée d'une mémoire tampon, une unité de traitement 52, équipée par exemple d'un microprocesseur, et pilotée par le programme d'ordinateur 53, nécessaires à la mise en œuvre du procédé d'aide à l'authentification d'un utilisateur, selon les différents modes de réalisation de l'invention.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée par exemple une ou plusieurs informations de fonctionnement, associées à un ou plusieurs objets connectés préalablement associés à l'utilisateur. Le microprocesseur de l'unité de traitement 52 met en œuvre les étapes du procédé d'aide à l'authentification d'un utilisateur, selon les instructions du programme d'ordinateur 53 pour permettre la collecte de ces informations de fonctionnement puis la gestion d'une transaction impliquant des données bancaires de l'utilisateur (traitement des informations de fonctionnement collectées puis détermination d'un niveau de confiance associé à la transaction et transmission d'une donnée représentative de ce niveau de confiance à un serveur bancaire du marchand).

Pour cela, le serveur de paiement comprend, outre la mémoire tampon 51, un module de collecte 40, comprenant au moins un récepteur 401, un module de gestion 41 d'une transaction, comprenant un module de traitement 410 et un module de transmission, comprenant au moins un émetteur 411, comme décrits ci-dessus.

Ces modules peuvent être pilotés par le processeur de l'unité de traitement 52 en fonction du programme d'ordinateur 53.

## Revendications

1. Procédé d'aide à l'authentification d'un utilisateur, procédé mis en œuvre au sein d'un serveur de fourniture de services de paiement, dit serveur de paiement, le procédé comprenant:
• une phase de collecte (10), sans intervention dudit utilisateur, d'au moins une information de fonctionnement relative à au moins un objet connecté préalablement associé audit utilisateur ;
• une phase de gestion (11) d'une transaction impliquant des données bancaires dudit utilisateur et un marchand, comprenant les étapes suivantes :
∘ traitement (110) de ladite au moins une information de fonctionnement collectée lors de ladite phase de collecte, ladite étape de traitement comprenant les sous-étapes suivantes :
▪ comparaison de ladite au moins une information de fonctionnement collectée avec au moins une information de fonctionnement de référence, délivrance d'un résultat de comparaison ;
▪ mise à jour d'un niveau de confiance associé à ladite transaction en fonction dudit résultat de comparaison ;
▪ délivrance d'au moins une donnée représentative d'un niveau de confiance associé à ladite transaction ;
∘ transmission (111), vers au moins un serveur bancaire dudit marchand, de ladite au moins une donnée représentative du niveau de confiance associé à ladite transaction pour décider si la transaction dudit utilisateur peut être validée.

2. Procédé d'aide à l'authentification d'un utilisateur selon la revendication 1, **caractérisé en ce que** ledit au moins un objet connecté prédéterminé appartient au groupe comprenant au moins :
• un ordinateur ;
• un assistant numérique personnel ;
• une tablette;
• un smartphone ;
• une montre connectée ;
• un bracelet connecté.

3. Procédé d'aide à l'authentification d'un utilisateur selon la revendication 1, **caractérisé en ce que** ladite information de fonctionnement collectée appartient au groupe comprenant au moins :
• une information d'activation dudit objet connecté ;
• une information de localisation dudit objet connecté ;
• une information de connexion dudit objet connecté ;
• une combinaison d'au moins deux desdites informations de fonctionnement.

4. Procédé d'aide à l'authentification d'un utilisateur selon la revendication 1, **caractérisé en ce que** ladite mise à jour dudit niveau de confiance tient également compte d'au moins un critère appartenant au groupe comprenant :
• une donnée représentative de ladite transaction ;
• une catégorie d'appartenance dudit objet connecté ;
• un contexte de mise en œuvre de ladite transaction ;
• une combinaison d'au moins deux desdits critères ci-dessus.

5. Procédé d'aide à l'authentification d'un utilisateur selon la revendication 1, **caractérisé en ce que** ladite phase de collecte comprend :
• une étape d'enregistrement, dans au moins une base de données rattachée audit serveur de paiement, d'au moins un identifiant et d'au moins une caractéristique de collecte pour ledit objet connecté, et
au moins une itération des étapes suivantes :
• collecte de ladite au moins une information de fonctionnement associée audit au moins un objet connecté associé audit utilisateur, ladite collecte utilisant ladite au moins une caractéristique de collecte enregistrée ;
• horodatage de ladite au moins une information de fonctionnement collectée et mise à jour de ladite base de données avec ladite au moins une information de fonctionnement collectée horodatée.

6. Procédé d'aide à l'authentification d'un utilisateur selon la revendication 1, **caractérisé en ce que** ladite phase de gestion d'une transaction est déclenchée par la réception d'au moins un message en provenance d'un dispositif mettant en œuvre ladite transaction impliquant lesdites données bancaires dudit utilisateur.

7. Serveur (400) de fourniture de services de paiement mettant en œuvre le procédé d'aide à l'authentification d'un utilisateur selon l'une quelconque des revendications 1 à 6, ledit serveur de fourniture de services de paiement comprenant
• un module de collecte (40), comprenant au moins un récepteur (401) apte à collecter, sans intervention dudit utilisateur, au moins une information de fonctionnement relative à au moins un objet connecté préalablement associé audit utilisateur ;
• un module de gestion (41) d'une transaction impliquant des données bancaires dudit utilisateur et un marchand, comprenant :
∘ un module de traitement (410) de ladite au moins une information de fonctionnement collectée, ledit module de traitement étant apte à :
▪ comparer ladite information de fonctionnement collectée avec une information de fonctionnement de référence, délivrer un résultat de comparaison ;
▪ mettre à jour d'un niveau de confiance associé à ladite transaction en fonction dudit résultat de comparaison ;
▪ délivrer au moins une donnée représentative d'un niveau de confiance associé à ladite transaction;
∘ un module de transmission, comprenant au moins un émetteur (411) apte à transmettre, vers au moins un serveur bancaire dudit marchand, ladite au moins une donnée représentative d'un niveau de confiance associé à ladite transaction pour décider si la transaction dudit utilisateur peut être validée.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'aide à l'authentification d'un utilisateur selon la revendication 1 à 6, lorsqu'il est exécuté par un processeur.

## Patentansprüche

1. Hilfsverfahren zur Authentifizierung eines Nutzers, Verfahren, das in einem Server zur Erbringung von Zahlungsdiensten umgesetzt wird, der Zahlungsserver genannt wird, wobei das Verfahren aufweist:
• eine Phase des Sammelns (10) ohne Eingriff des Nutzers mindestens einer Betriebsinformation, die sich auf mindestens ein verbundenes Objekt bezieht, das zuvor dem Nutzer zugeordnet wird,
• eine Verwaltungsphase (11) einer Transaktion, die Bankdaten des Nutzers und eines Händlers betrifft, umfassend die folgenden Schritte:
∘ Verarbeiten (110) der mindestens einen Betriebsinformation, die während der Phase des Sammelns gesammelt wird, wobei der Verarbeitungsschritt die folgenden Unterschritte aufweist:
▪ Vergleichen der mindestens einen gesammelten Betriebsinformation mit mindestens einer Referenz-Betriebsinformation, Ausgeben eines Vergleichsergebnisses,
▪ Aktualisieren eines Konfidenzniveaus, das mit der Transaktion verbundenen ist, in Abhängigkeit von dem Vergleichsergebnis,
▪ Ausgeben von mindestens einer Dateneinheit, die für ein Konfidenzniveau repräsentativ ist, das mit der Transaktion verbundenen ist,
∘ Übertragen (111) an mindestens einen Bankserver des Händlers der mindestens einen Dateneinheit, die für das Konfidenzniveau repräsentativ ist, das mit der Transaktion verbundenen ist, um zu entscheiden, ob die Transaktion des Nutzers validiert werden kann.

2. Hilfsverfahren zur Authentifizierung eines Nutzers nach Anspruch 1, **dadurch gekennzeichnet, dass** das mindestens eine vorbestimmte verbundene Objekt zu der Gruppe gehört, die mindestens aufweist:
• einen Computer,
• einen persönlichen digitalen Assistenten,
• ein Tablet,
• ein Smartphone,
• eine verbundene Uhr,
• ein verbundenes Armband.

3. Hilfsverfahren zur Authentifizierung eines Nutzers nach Anspruch 1, **dadurch gekennzeichnet, dass** die gesammelte Betriebsinformation zu der Gruppe gehört, die mindestens aufweist:
• eine Aktivierungsinformation des verbundenen Objekts,
• eine Lokalisierungsinformation des verbundenen Objekts,
• eine Verbindungsinformation des verbundenen Objekts,
• eine Kombination von mindestens zwei der Betriebsinformationen.

4. Hilfsverfahren zur Authentifizierung eines Nutzers nach Anspruch 1, **dadurch gekennzeichnet, dass** das Aktualisieren des Konfidenzniveaus auch mindestens ein Kriterium berücksichtigt, das zu der Gruppe gehört, umfassend:
• eine Dateneinheit, die für die Transaktion repräsentativ ist,
• eine Zugehörigkeitskategorie des verbundenen Objekts,
• einen Kontext der Umsetzung dieser Transaktion,
• eine Kombination von mindestens zwei der oben angeführten Kriterien.

5. Hilfsverfahren zur Authentifizierung eines Nutzers nach Anspruch 1, **dadurch gekennzeichnet, dass** die Phase des Sammelns aufweist:
• einen Schritt des Aufzeichnens von mindestens einer Kennung und mindestens einem Sammlungsmerkmal für das verbundene Objekt in mindestens einer Datenbank, die an den Zahlungsserver angeschlossenen ist, und mindestens eine Iteration der folgenden Schritte:
• Sammeln der mindestens einen Betriebsinformation, die dem mindestens einen verbundenen Objekt zugeordnet wird, das dem Nutzer zugeordnet wird, wobei das Sammeln das mindestens eine aufgezeichnete Sammelmerkmal verwendet,
• Zeitstempeln der mindestens einen gesammelten Betriebsinformation und Aktualisieren der Datenbank mit der mindestens einen zeitgestempelten gesammelten Betriebsinformation.

6. Hilfsverfahren zur Authentifizierung eines Nutzers nach Anspruch 1, **dadurch gekennzeichnet, dass** die Verwaltungsphase einer Transaktion durch das Empfangen mindestens einer Nachricht von einer Vorrichtung ausgelöst wird, die die Transaktion umsetzt, die die Bankdaten des Nutzers und eines Händlers betrifft.

7. Server (400) zur Erbringung von Zahlungsdiensten, der das Hilfsverfahren zur Authentifizierung eines Nutzers nach einem der Ansprüche 1 bis 6 umsetzt, wobei der Server zur Erbringung von Zahlungsdiensten aufweist
• ein Modul zum Sammeln (40), umfassend einen Empfänger (401), der geeignet ist, ohne Eingriff des Nutzers mindestens eine Betriebsinformation, die sich auf mindestens ein verbundenes Objekt bezieht, das zuvor dem Nutzer zugeordnet wurde, zu sammeln,
• ein Modul zum Verwalten (41) einer Transaktion, die Bankdaten des Nutzers und eines Händlers betrifft, umfassend:
∘ ein Modul zum Verarbeiten (410) der mindestens einen gesammelten Betriebsinformation, wobei das Modul zum Verarbeiten geeignet ist:
▪ die gesammelte Betriebsinformation mit einer Referenz-Betriebsinformation zu vergleichen, ein Vergleichsergebnis auszugeben,
▪ ein Konfidenzniveau, das mit der Transaktion verbundenen ist, in Abhängigkeit von dem Vergleichsergebnis zu aktualisieren,
▪ eine Dateneinheit auszugeben, die für ein Konfidenzniveau repräsentativ ist, das mit der Transaktion verbundenen ist,
∘ ein Modul zum Übertragen, umfassend mindestens einen Sender (411), der geeignet ist, an mindestens einen Bankserver des Händlers die mindestens eine Dateneinheit zu übertragen, die für das Konfidenzniveau repräsentativ ist, das mit der Transaktion verbundenen ist, um zu entscheiden, ob die Transaktion des Nutzers validiert werden kann.

8. Computerprogrammprodukt, das von einem Kommunikationsnetz herunterladbar ist und/oder auf einem computerlesbaren Medium gespeichert und/oder von einem Mikroprozessor ausführbar ist, **dadurch gekennzeichnet, dass** es Programmcodebefehle für das Ausführen eines Hilfsverfahren zur Authentifizierung eines Nutzers nach Anspruch 1 bis 6 aufweist, wenn es auf einem Prozessor ausgeführt wird.

## Claims

1. Method of assistance in the authentication of a user, said method being implemented within a payment-services providing server, called a payment server, said method comprising:
• a phase (10) for collecting, without intervention by said user, at least one piece of operating information about at least one connected object preliminarily associated with said user;
• a phase (11) for managing a transaction involving bank data of said user and a merchant, comprising the following steps:
∘ processing (110) said at least one piece of operating information collected during said phase for collecting, said step of processing comprising the following sub-steps:
▪ comparing said collected operating information with a piece of reference operating information, delivering a result of a comparison;
▪ updating a level of trust associated with said transaction as a function of said result of comparison;
▪ delivering of at least one piece of data representing a level of trust associated with said transaction;
∘ transmitting (111), to at least one bank server of said merchant, of said at least one piece of data representing a level of trust associated with said transaction to decide if the transaction of said user can be validated.

2. Method of assistance in the authentication of a user according to claim 1, **characterized in that** said predetermined connected object belongs to the group comprising at least:
• a computer;
• a personal digital assistant;
• a tablet;
• a smartphone;
• a connected watch;
• a connected bracelet.

3. Method of assistance in the authentication of a user according to claim 1, **characterized in that** said collected piece of operating information belongs to the group comprising at least:
• a piece of information on activation of said connected object;
• a piece of information on location of said connected object;
• a piece of information on connection of said connected object;
• a combination of at least two of said pieces of operating information.

4. Method of assistance in the authentication of a user according to claim 1, **characterized in that** said updating of said level of trust also takes account of at least one criterion belonging to the group comprising:
• a piece of data representing said transaction;
• a category to which said connected object belongs;
• a context of implementation of said transaction;
• a combination of at least two of said above criteria.

5. Method of assistance in the authentication of a user according to claim 1, **characterized in that** said phase for collecting comprises:
• a step of registration of at least one identifier and one collection characteristic for said connected object in at least one data base attached to said payment server, and
at least one iteration of the following steps:
• collecting said at least one piece of operating information associated with said at least one connected object associated with said user, this action of collecting using said at least one registered collection characteristic;
• time-stamping said at least one piece of collected operating information and updating said data base with said at least one piece of time-stamped, collected operating information.

6. Method of assistance in the authentication of a user according to claim 1, **characterized in that** said phase for managing a transaction is activated by the reception of at least one message coming from a device carrying out said transaction involving said bank data of said user.

7. Payment-services providing server (400) implementing the method of assistance in authentication of a user according to any one of the claims 1 to 6, said payment-services providing server comprising:
• a collecting module (40), comprising at least one receiver (401) capable of collecting, without intervention by said user, at least one piece of operating information pertaining to at least one connected object preliminarily associated with said user;
• a management module (41) for managing a transaction involving bank data of said user and a merchant, comprising:
∘ a module (410) for processing said at least piece of collected operating information, said module for processing being capable of:
▪ comparing said collected operating information with a piece of reference operating information, delivering a result of a comparison;
▪ updating a level of trust associated with said transaction as a function of said result of comparison;
▪ delivering at least one piece of data representing a level of trust associated with said transaction;
∘ a transmission module, comprising at least one transmitter (411) capable of transmitting, to at least one bank server of said merchant, said at least one piece of data representing of a level of trust associated with said transaction to decide if the transaction of said user can be validated.

8. Computer program downloadable from a communications network and/or stored in a computer readable medium and/or executable by a microprocessor, **characterized in that** it comprises program code instructions to execute a method of assistance in the authentication of a user according to claims 1 to 6 when it is executed by a processor.
